# EUROPÄISCHE PATENTSCHRIFT

(11) **EP 1 368 189 B1**
(45) Veröffentlichungstag und Bekanntmachung des Hinweises auf die Patenterteilung: **26.07.2006**
(21) Anmeldenummer: 02706730.5
(22) Anmeldetag: 24.01.2002
(51) Int. Cl.: B32B 15/01

(54) **VERFAHREN ZUM HERSTELLEN EINES TITAN-ALUMINIUM-FORMBAUTEILS**
METHOD FOR PRODUCING A TITANIUM ALUMINIUM MOULDED ELEMENT
PROCEDE DE PRODUCTION D'UN ELEMENT DE TITANE ALUMINIUM

(30) Priorität: 25.01.2001 DE 10103169
(43) Veröffentlichungstag der Anmeldung: 10.12.2003
(73) Patentinhaber: Deutsche Titan GmbH, 45143 Essen (DE)
(72) Erfinder: SIBUM, Heinz, 45257 Essen (DE)
(74) Vertreter: Knauf, Rudolf
(86) Internationale Anmeldenummer: PCT/EP2002/000712
(87) Internationale Veröffentlichungsnummer: WO 2002/058923

(56) Entgegenhaltungen:
- US-A- 3 165 829
- US-A- 3 359 142
- US-A- 3 397 045
- US-A- 3 496 621
- US-A- 3 711 937
- US-A- 4 046 304
- US-A- 4 197 360
- US-A- 5 373 257
- PATENT ABSTRACTS OF JAPAN vol. 012, no. 392 (M-755), 19. Oktober 1988 (1988-10-19) -& JP 63 140782 A (SUMITOMO SPECIAL METALS CO LTD), 13. Juni 1988 (1988-06-13)
- PATENT ABSTRACTS OF JAPAN vol. 1996, no. 08, 30. August 1996 (1996-08-30) -& JP 08 090257 A (SUMITOMO METAL IND LTD), 9. April 1996 (1996-04-09)
- PATENT ABSTRACTS OF JAPAN vol. 016, no. 455 (C-0987), 22. September 1992 (1992-09-22) -& JP 04 160126 A (NIPPON YAKIN KOGYO CO LTD), 3. Juni 1992 (1992-06-03)

## Beschreibung

Da ein Blech aus einem Monometall für bestimmte betriebliche Einsätze in der Regel nicht in jeder Hinsicht optimale Eigenschaften (Festigkeit, Korrosionsschutz, Verformbarkeit, geringes Gewicht) aufweist, hat man Verbundwerkstoffe entwickelt, die aus walzplattierten Blechen aus verschiedenen Metallen bestehen..Insbesondere ist ein walzplattiertes Blech und dessen Herstellung bekannt (US-PS 3,711,937 A), das aus einem Aluminiumblech als Trägerblech und einer Deckfolie aus Titan besteht. Um die beiden Komponenten durch Walzplattieren miteinander zu verbinden, werden sie nach Vorerwärmung auf etwa 500° C einem Walzgerüst zugeführt, in dem sie - verbunden mit einer Dickenreduktion bis zu 50 % - fest miteinander verbunden werden. Um die Qualität der Titan-Aluminium-Verbindung an der Grenzschicht zu verbessern, findet anschließend eine Wärmenachbehandlung bei Temperaturen bis zu ca. 600° C statt. Ein Charakteristikum eines derartigen Kompositbleches ist, daß das Aluminiumblech an seiner Außenseite mit der Folie aus Reintitan abgedeckt ist. Für eine Reihe von Anwendungen wie Flugzeugbau, Wärmetauscher und elektrochemische Anlagen mögen solche Kompositbleche gut geeignet sein. Für hochtemperaturbeanspruchte Einsätze, wie zum Beispiel als Komponenten in Abgassystemen von Verbrennungskraftmaschinen, wo Temperaturen weit über 600°C üblich sind, sind sie jedoch nicht geeignet, weil das Reinaluminium den herrschenden Betriebstemperaturen nicht standhält und das Reintitan keinen ausreichenden Korrosionsschutz bietet.

Aus der US-Patentschrift 4,046,304 ist ein weiteres Ti-Al-Kompositblech sowie ein Verfahren zu seiner Herstellung bekannt. Im Rahmen dieses Verfahrens wird zunächst eine dünne Aluminiumfolie mit einem Substratblech aus einem metallischen Werkstoff, beispielsweise aus Titan, durch Kaltwalzplattieren verbunden. Sodann wird das so entstandene Kompositblech zur Ausbildung einer sehr dünnen Ti-Al-Diffusionsschicht bei 350°C diffusionsgeglüht. In einem weiteren Schritt wird zur Herstellung des endgültigen Kopositbleches ein Aluminiumblech auf die Aluminiumoberfläche des intermediären Kompositblechs aufgelegt und mit diesem bei einer Temperatur von 400°C durch Warmwalzplattieren verbunden. Abschließend kann das Kompositblech zur Verbesserung der Verbindung einer weiteren Wärmebehandlung unterzogen werden. Nachteilig an dem durch diesen Prozeß hergestellten Kompositblech ist ebenfalls seine mangelnde Eignung für Hochtemperaturanwendungen infolge der geringen Hitzebeständigkeit des Reinaluminiumanteils.

Aus der JP-A-63 140 782 ist ein Verfahren zur Herstellung einer beidseitig aluminiumplattierten Titanblechtafel bekannt. Hierbei werden die Al-Schichten durch Walzplattieren auf die Ti-Blechtafel aufgebracht und anschließend bei einer Temperatur von 500 bis 600°C für eine Dauer von 1 bis 6 Stunden in einem Durchlaufofen in vacuo oder in einer Inertgasatmoshpäre diffusiongeglüht. Dadurch entsteht eine hochfeste Verbindung unter den einzelnen Materialschichten. Allerdings ist die Hochtemperatureignung dieses Materialverbundes aufgrund des Reinaluminiumanteils ebenfalls begrenzt. JP-A-04 160 126 beschreibt die Herstellung dünner plattenförmiger Produkte aus intermetallischer Ti Al Verbindung, wobei eine mittlere Ti-Schicht beidseitig durch Walzplattieren mit je einer Al-Schicht verbunden wird. Drei solche Produkte werden übereinander gelegt und dem Walzplattieren unterworfen. Die so erhaltenen mehrschichtigen Produkte mit einer Schichtoliche von jeweils ≤ 20µm werden bei einer Temperatur von 400-1460° C 1 sec bis 100 h lang zur Diffusion wärmebehandelt.

Der Erfindung liegt die Aufgabe zugrunde, ein Verfahren zur Herstellung eines Bleches zu entwickeln, das im Hochtemperaturbereich bis ca. 800°C eingesetzt werden kann, einen ausreichenden Korrosionsschutz bietet und zu einem Formbauteil umgeformt werden kann.

Diese Aufgabe wird mit einem Verfahren zur Herstellung eines Formbauteils unter Verwendung eines walzplattierten Titanbleches gelöst, welches folgende Verfährensschritte umfaßt:
a) Das Titanblech wird mindestens einseitig mit einer Aluminiumfolie walzplattiert, deren Dicke im Vergleich zur Dicke des Titanbleches vorzugsweise klein ist.
b) Das walsplattierte Titanblech wird zum Formbauteil verformt.
c) Durch Wärmebehandlung des walzplattierten Titanbleches wird das Aluminium der Aluminiumfolie mit dem Titanblech aus dem angrenzenden Bereich des Titanbleches zu einer Titan-Aluminium-Legierung umgesetzt.
d) Die äußere Titan-Aluminium-Legierungsschicht des Titanbleches wird durch Kontakt mit Sauerstoff in eine Titan-Aluminium-Mischoxidschicht umgewandelt.

Die gegebenenfalls sich erst beim bestimmungsgemäßen betrieblichen Einsatz des Titanbleches bildende Titan-Aluminium-Legierung und Mischoxidschicht gibt dem Titan einen wesentlich besseren Korrosionsschutz, als Titan von Hause aus schon hat. Der Nachteil, daß das Titanblech nach der Legierungsbildung und erst recht nach der Bildung der Titan-Aluminium-Mischoxidschicht schlecht umformbar ist, wird vermieden, indem die Umformung des Titanbleches zum Formbauteil vor der Wärmebehandlung erfolgt. Besonders vorteilhaft ist es, wenn die Wärmebehandlung erst beim bestimmungsgemäßen betrieblichen Einsatz des Formbauteiles, zum Beispiel durch die in Abgassystemen von Verbrennungsmotoren herrschende Wärme, erfolgt.

Damit durch eine herstellungstechnisch noch vertretbare Wärmebehandlung des Titanbleches ein ausreichender Korrosionsschutz erhalten wird, sollte die Alumiumfolie im Vergleich zum Titanblech sehr dünn sein. Gute Erfahrungen hat man mit einem Dickenverhältnis der verwendeten Aluminiumfolie und des verwendeten Titanbleches im Bereich einer Zehnerpotenz gemacht, insbesondere mit einem Titanblech mit einer Dicke zwischen 1 und 2,5 mm und einer Aluminiumfolie mit einer Dicke zwischen 0,01 und 0,2 mm. Nach dem mit einer Dickenreduktion der Aluminiumfolie verbundenen Walzplattieren sollte die Aluminiumschicht zwischen 0,02 und 0,06 mm liegen. Derart dünne Aluminiumschichten lassen sich problemlos in ihrer vollen Stärke durchlegieren, so daß das Titanblech nach der Mischoxidbildung einen optimalen, dauerhaften Korrosionsschutz auch unter den extremen Betriebsbedingungen, wie sie in einem Abgassystem eines Verbrennungsmotors herrschen, hat.

Im folgenden wird die Erfindung anhand einer das erfindungsgemäße Verfahren schematisch darstellenden Zeichnung näher erläutert.

Von einem Coil 1 wird Aluminiumfolie 2 mit einer Dicke von 0,01 bis 0,2 mm und von einem Coil 3 Titanblech 4 in Bandform mit einer Dicke von 1 bis 2,5 mm abgezogen und einem Walzgerüst 5 mit Umgebungstemperatur zugeführt. Im Walzspalt findet infolge des Walzdruckes und der Reibung der Aluminiumfolie 2 und des bandförmigen Titanbleches 4 aufeinander eine Temperaturerhöhung statt, die ausreicht, um die Aluminiumfolie 2 auf das bandförmige Titanblech 4 aufzuplattieren. Eine eventuell die Verbindung beeinträchtigende Oxidschicht wird durch die Reibung zwischen der Aluminiumfolie 2 und dem bandförmigen Titanblech 4 in einem ausreichenden Maße aufgebrochen. Nach Verlassen des Walzgerüstes 5 wird das aluminiumplattierte Titanband 6 einer Schere 7 zugeführt, die es in Tafeln 8 ablängt. Die Tafeln 8 können gestapelt werden oder werden der Weiterverarbeitung 9 zugeführt, zum Beispiel einer Anlage zum Zuschneiden und Umformen zu Formbauteilen 10. Da bis zu diesem Zeitpunkt mangels Wärmebehandlung noch keine Legierungsbildung zwischen dem bandförmigen Titanblech 4 und der Aluminiumfolie 2 stattgefunden hat, läßt sich das aluminiumplattierte Titanband 6 auch als Verbundblech leicht verformen. Zum Schluß werden die Formbauteile 10 einer Wärmebehandlung 11 zugeführt, die durch Temperatur- und Zeitführung eine Einstellung des Legierungsprofiles ermöglicht. Abschließend werden die Formbauteile 10 mit der einseitigen Legierungsschicht der Sauerstoffatmosphäre ausgesetzt, so daß sich als Korrosionsschutzschicht die gewünschte Titan-Aluminium-Mischoxidschicht bildet.

Es versteht sich, daß auf das Titanblech 4 nicht nur einseitig, wie im Ausführungsbeispiel, sondern auch beidseitig eine Aluminiumfolie aufplattiert werden kann. In diesem Fall ist dann ein weiteres Coil mit Aluminiumfolie vorgesehen.

Die Erfindung ist besonders gut für eine Arbeitsteilung geeignet. Der Hersteller des aluminiumplattierten Titanbleches liefert es entweder in Tafelformat oder als Coil an den Weiterverarbeiter, der daraus seine Zuschnitte und Formbauteile 10 herstellt. Der Weiterverarbeiter kann zwar als abschließende Fertigungsstufe die Wärmebehandlung der Formbaüteile 10 zur Legierungsbildung durchführen, doch kann er darauf verzichten, wenn die Formbauteile 10 im späteren betrieblichen Einsatz Betriebstemperaturen ausgesetzt werden, die für eine Legierungsbildung ausreichen.

Zusammenfassend ergeben sich durch die Erfindung folgende Vorteile: Leichtes Gewicht und hohe Festigkeit aufgrund des verwendeten Materials Titan, guter Korrosionsschutz durch die Titan-Aluminium-Mischoxidschicht, leichte Umformbarkeit des Titanbleches vor der Legierungsbildung der Titan-Aluminium-Mischoxidschicht und Festigkeit bei Hochtemperaturen (weit über 600° C).

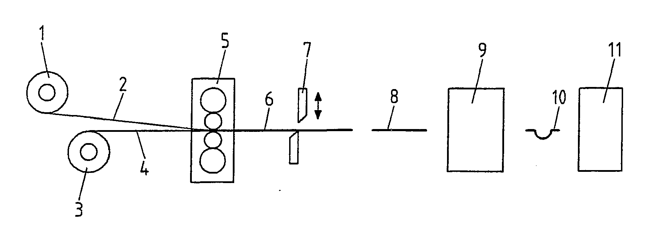

## Patentansprüche

1. Verfahren zum Herstellen eines Formbauteils unter Verwendung eines walzplattierten Titanbleches (6), mit folgenden Verfahrensschritten :
a) Das Titanblech (2) wird mindestens einseitig mit einer Aluminiumfolie (4) walzplattiert.
(b) Das walzplattierte Titanblech (6) wird zum Formbauteil (10) verformt.
c) Durch Wärmebehandlung des zum Formbanteil ungeformten, walzplattierten Titanbleches (6) wird das Aluminium der Aluminiumfolie (4) mit dem Titan aus dem angrenzenden Bereich des Titanbleches (6) zu einer Titan-Aluminium-Legierung umgesetzt.
d) Die äußere Titan-Aluminium-Legierungsschicht des Titanbleches (6) wird durch Kontakt mit Sauerstoff in eine Titan-Aluminium-Mischoxidschicht umgewandelt.

2. Verfahren nach Anspruch 2,
**dadurch gekennzeichnet, dass** die Wärmebehandlung zur Legierungsbildung erst beim bestimmungsgemäßen betrieblichen Einsatz des Formbauteiles (10) erfolgt.

3. Verfahren nach Anspruch 1 oder 2,
**dadurch gekennzeichnet, dass** für die Aluminiumfolie (4) und das Titanblech (6) Materialdicken mit einem Verhältnis d/D im Bereich einer Zehnerpotenz verwendet werden.

4. Verfahren nach einem der Ansprüche 1 bis 3,
**dadurch gekennzeichnet, dass** ein Titanblech (2) mit einer Dicke (D) zwischen 1 und 2,5 mm und eine Aluminiumfolie mit einer Dicke (< d) zwischen 0,1 und 0,2 mm verwendet werden.

5. Verfahren nach einem der Ansprüche 1 bis 4,
**dadurch gekennzeichnet, dass** beim Walzplattieren die Dicke der Aluminiumschicht auf 0,02 bis 0,06 mm reduziert wird.

## Claims

1. Method for producing a moulded element using a roll-bonded titanium sheet (6), comprising the following method steps:
a) The titanium sheet (2) is roll-bonded on at least one side with an aluminium foil (4).
b) The roll-bonded titanium sheet (6) is formed into the moulded element (10).
c) As a result of the heat treatment of the roll-bonded titanium sheet (6), which is formed into the moulded element, the aluminium of the aluminium foil (4) is reacted with the titanium from the adjacent region of the titanium sheet (6) to form a titanium/aluminium alloy.
d) The outer titanium/aluminium alloy layer of the titanium sheet (6) is converted, by contact with oxygen, into a titanium/aluminium mixed oxide layer.

2. Method according to Claim 1, **characterised in that** the heat treatment for forming the alloy does not take place until the moulded element (10) is used operationally in accordance with the regulations.

3. Method according to either Claim 1 or Claim 2, **characterised in that** material thicknesses having a ratio d/D in the range of a power of ten are used for the aluminium foil (4) and the titanium sheet (6).

4. Method according to any one of Claims 1 to 3, **characterised in that** a titanium sheet (2) having a thickness (D) between 1 and 2.5 mm and an aluminium foil having a thickness (< d) between 0.1 and 0.2 mm are used.

5. Method according to any one of Claims 1 to 4, **characterised in that** during the roll-bonding process, the thickness of the aluminium layer is reduced to 0.02 to 0.06 mm.

## Revendications

1. Procédé pour la fabrication d'un élément de construction en utilisant une plaque de titane (6) plaquée par laminage, les étapes du procédé étant les suivantes :
a) la plaque de titane (2) est plaquée par laminage avec une feuille d'aluminium (4),
b) la plaque de titane (6) plaquée par laminage est façonnée pour former l'élément de construction (10),
c) par traitement thermique de la plaque de titane (6), transformée en élément de construction façonné, l'aluminium de la feuille d'aluminium (4) est transformé avec le titane de la zone de la plaque de titane (6) adjacente en un alliage titane-aluminium,
d) la couche d'alliage titane-aluminium extérieure de la plaque de titane (6) est transformée en une couche d'oxydes mixtes titane-aluminium par mise en contact avec de l'oxygène.

2. Procédé selon la revendication 1,
**caractérisé en ce que** le traitement thermique pour la formation d'un alliage n'est effectué que lors de l'utilisation effective pour l'application prévue de l'élément de construction façonné (10).

3. Procédé selon revendication 1 ou 2,
**caractérisé en ce que**,
pour la feuille d'aluminium (4) et la plaque de titane (6), on utilise des épaisseurs de matériaux présentant un rapport d/D dans la gamme d'une puissance de dix.

4. Procédé selon l'une des revendications 1 à 3,
**caractérisé en ce que**
l'on utilise une plaque de titane (2) d'une épaisseur (D) située entre 1 et 2,5 mm et une feuille d'aluminium d'une épaisseur (< d) située entre 0,1 et 0,2 mm.

5. Procédé selon l'une des revendications 1 à 4,
**caractérisé en ce que**,
lors du placage par laminage, l'épaisseur de la couche d'aluminium est réduite jusqu'à de 0,02 à 0,06 mm.
